Europäisches Patentamt

European Patent Office

Office européen des brevets

(19)

(11) Veröffentlichungsnummer : **0 376 984 B1**

(12) **EUROPÄISCHE PATENTSCHRIFT**

(45) Veröffentlichungstag der Patentschrift :
27.05.92 Patentblatt 92/22

(51) Int. Cl.⁵ : **B60T 8/24,** B60K 28/16

(21) Anmeldenummer : **88909528.7**

(22) Anmeldetag : **28.10.88**

(86) Internationale Anmeldenummer :
**PCT/EP88/00976**

(87) Internationale Veröffentlichungsnummer :
**WO 89/04782 01.06.89 Gazette 89/12**

(54) **VERFAHREN ZUR ERZEUGUNG EINES EINE KURVENFAHRT ANZEIGENDEN SIGNALES.**

(30) Priorität : **21.11.87 DE 3739558**

(43) Veröffentlichungstag der Anmeldung :
**11.07.90 Patentblatt 90/28**

(45) Bekanntmachung des Hinweises auf die
Patenterteilung :
**27.05.92 Patentblatt 92/22**

(84) Benannte Vertragsstaaten :
**CH DE FR GB IT LI SE**

(56) Entgegenhaltungen :
**DE-A- 3 234 282**
**FR-A- 1 216 806**

(73) Patentinhaber : **ROBERT BOSCH GMBH**
**Postfach 30 02 20**
**W-7000 Stuttgart 30 (DE)**

(72) Erfinder : **JONNER, Wolf-Dieter**
**Burgunderstrasse 25**
**W-7141 Beilstein-Schmidhausen (DE)**
Erfinder : **REIMANN, Gerd**
**Steglesweg 3**
**W-7141 Grossbottwar 3 (DE)**
Erfinder : **ROLLER, Dieter**
**Hohenstrasse 14**
**W-5450 Neuwied 12 (DE)**

(74) Vertreter : **Kammer, Arno, Dipl.-Ing.**
**ROBERT BOSCH GmbH Zentralabteilung**
**Patente Postfach 30 02 20**
**W-7000 Stuttgart 30 (DE)**

## Beschreibung

### Stand der Technik

Aus der DE-A-34 21 700 ist ein'Antiblockierregelsystem bekannt, das Meßwertgeber, eine Auswerteschaltung und Bremsdrucksteuereinrichtungen aufweist. Die Vorderräder weisen zwar Einzelradregelung auf, jedoch ist eine Giermomentenaufbauverzögerung vorgesehen, die am auf einem Belag mit höherem µ laufenden Vorderrad (high-Rad) ab Regelungsbeginn am auf einem Belag mit geringeren y laufenden Vorderrad (low-Rad) nur einen verlangsamten Druckaufbau zuläßt. Diese Maßnahme hat den Zweck, Giermomente um die Fahrzeughochachse bei Fahrbahnen mit asymetrischem Reibbeiwert nur verlangsamt entstehen zu lassen, sodaß das Fahrzeug beherrschbar bleibt.

Diese Giermomentenaufbauverzögerung ist jedoch bei Kurvenfahrt und einer dann stattfindenden Regelung nachteilig, weil ein gebremstes Fahrzeug in der Kurve ein in den Kreis drehendes Verhalten aufweist und durch die Giermomentenaufbauverzögerung das Entstehen eines entgegengerichteten Moments durch die sofortige volle Bremswirkung am kurvenäußeren Vorderrad verzögert wird. Deshalb wird dort vorgeschlagen die Giermomentenaufbauverzögerung bei Kurvenfahrt abzuschalten und den Druck in den Radbremsen der Vorderräder dann individuell zu regeln. Zur Kurvenerkennung wird ein Querbeschleunigungsgeber verwendet.

Nachteilig ist die Notwendigkeit der Verwendung eines zusätzlichen Querbeschleunigungsgebers und von zusätzlichen Überwachungsmitteln für diesen.

### Vorteile der Erfindung

Bei dem erfindungsgemäßen Kurvenerkennungsverfahren gemäß den Merkmalen des Anspruchs 1 wird die Kurve ohne zusätzliche Sensoren erkannt, wenn man davon ausgeht, daß die Radgeschwindigkeitssensoren aus anderen Gründen (z.B. ABS) vorgesehen sind.

Das so gewonnene Kurvenerkennungssignal kann z.B. zur Abschaltung der Giermomentenaufbauverzögerung, zur Umschaltung von Schlupf- und BeschleunigungsSchwellen in der Auswertschaltung, aber auch zur Überwachung eines benutzten Querbeschleunigungsgebers verwendet werden.

Es hat sich gezeigt, daß bei stationärer Kurvenfahrt auch ohne Bremsung wenigstens in einer Diagonale eine Geschwindigkeitsdifferenz auftritt. Bei einer Linkskurve zeigt bei einem heckgetriebenen Fahrzeug die Diagonale linkes Vorderrad / rechtes Hinterrad eine solche Differenz. Bei einem Fronttriebler ist es bei gleichem Bedingungen gerade die andere Diagonale.

Verwendet man nur die Geschwindigkeitsdifferenz so ist es vorteilhaft, die Kurvenerkennung erst dann zu signalisieren, wenn die Differenz eine bestimmte Zeit vorhanden ist. Diese Zeit ist für verschiedene Fahrzeugtypen unter° schiedlich und liegt bei einigen hundert Millisekunden. Auch die Schwelle für das ΔV, ab der eine für die Kurvenerkennung ausreichenden Differenz vorliegt, ist vom Fahrzeugtyp abhängig. Sie liegt in der Größenordnung von 1 - 3 Km/h. Es erscheint zweckmäßig, die Schwelle so zu legen, daß bei einer Querbeschleunigung von etwa 0,5 g die Kurvenerkennung einsetzt.

Es hat sich auch gezeigt, daß bei instationärer Kurvenfahrt Änderungen der Drehzahldifferenz auftreten. Auch diese lassen sich somit zur Kurvenerkennung ausnutzen. Günstigerweise werden jedoch beide Signalarten gemeinsam genutzt. Die oben erwähnte Beobachtungsdauer für die Geschwindigkeitsdifferenz kann dann reduziert werden.

### Figurenbeschreibung

Anhand der Zeichnung wird ein Ausführungsbeispiel der Erfindung erläutert.

Es zeigen:

Fig. 1 ein Blockschaltbild einer Anordnung zur Durchführung des erfindungsgemäßen Verfahrens und Nutzung des Kurvenerkennungssignals zur Abschaltung der Giermomentenaufbauverzögerung

Fig. 2 eine andere Anwendungsmöglichkeit.

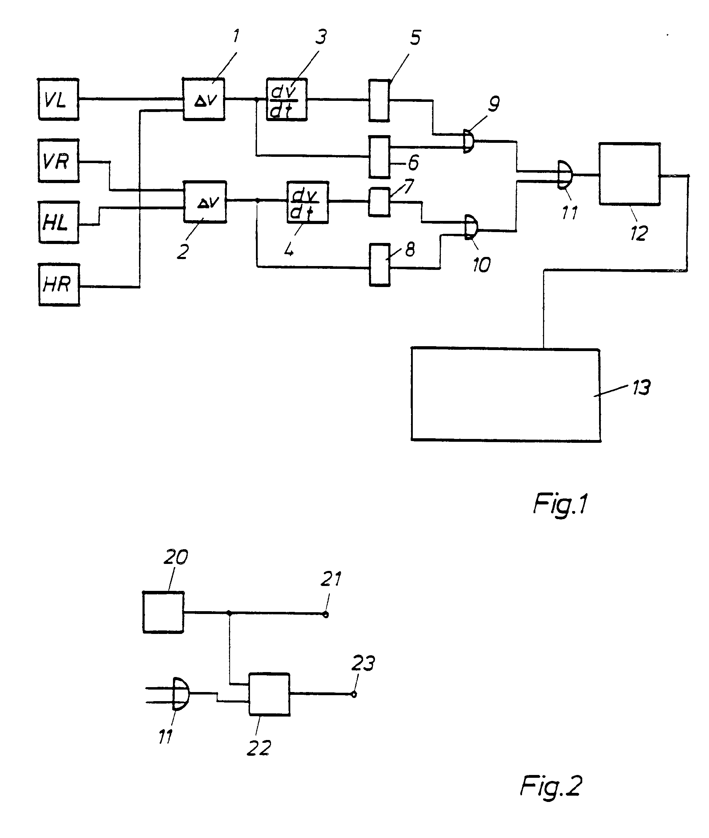

In Fig. 1 sind vier Sensoren zur Messung der Radgeschwindigkeiten gezeigt und mit VL (vorn/links) VR (vorn/rechts), HL (hinten/links) uns HR (hinten/rechts) bezeichnet. Die Signale der zu einer Diagonale gehörenden Sensoren sind jeweils mit einem Differenzbildner 1, 2 verbunden. Die Differenzen ΔV werden Block 3 und 4 zur Bildung von Änderungssignalen in Abhängigkeit von der Zeit zugeführt.

In Vergleichern 6 und 8 werden die Geschwindigkeitsdifferenzen ΔV mit Schwellenwerten verglichen. In Vergleichern 5 und 7 erfolgt ein Vergleich der Änderungssignale mit Schwellenwerten. Gibt ein Vergleicher 5 oder 6 oder 7 oder 8 ein Signal ab, so wird über die ODER-Gatter 9 und 10 und über ein ODER-Gatter 11 ein monostabiles Glied 12 mit vorgegebener Zeitkonstante gesetzt; dessen Ausgangssignal wird der Auswerteschaltung 13 eines ABS zugeführt und schaltet dort die Giermomentenaufbauverzögerung ab. Nach Ende des von einem der ODER-Gatter 9 und 10 abgegebenen Signals und nach Ablauf der Zeitkonstanten des monostabilen Glieds 12 endet die Abschaltung der Giermomentenaufbauverzögerung sofern keine ABS-Regelung läuft.

In Fig. 2 ist unterstellt, daß ein Querbeschleunigungsgeber 20 zur Abschaltung über eine Klemme 21 verwendet wird und das Signal des Oder-Gatter 11 zur Kontrolle dieses Querbeschleunigungsgebers 20 benutzt wird. Hierzu werden die eine Kurvenfahrt anzeigenden Signale einem Wergleicher 22 zugeführt, der bei Erkennen einer kurve über die Anordnung der Fig. 1, ohne daß der Qeurbeschleunigungsgeber 20 ein entsprechendes Signal abgibt, ein Warn - und/oder Abschaltsignal über einer klemme 23 abgibt.

## Patentansprüche

1. Verfahren zur Erzeugung eines eine Kurvenfahrt anzeigenden Signals in einem Fahrzeug, wobei den Rädern des Fahrzeugs Meßwertgeber zur Ermittlung der Radgeschwindigkeiten zugeordnet sind, dadurch gekennzeichnet, daß die Geschwindigkeitsdifferenz $\Delta V$ diagonal zueinander liegender Räder und/oder die zeitliche Änderung dieser Differenzen gebildet werden und daß bei Überschreiten vorgegebener Grenzwerte durch wenigstens eines dieser Signale das die Kurvenfahrt anzeigende Signal erzeugt wird.

2. Verfahren nach Anspruch 1, dadurch gekennzeichnet, daß das die Kurvenfahrt anzeigende Signal in einem mit einem Antiblockierregelsystem mit getrennter Regelung der Vorderräder und einer Giermomentenaufbauverzögerung ausgestatteten Fahrzeug zur Abschaltung der Giermomentenaufbauverzögerung verwendet wird.

3. Verfahren nach Anspruch 1, dadurch gekennzeichnet, daß das die Kurvenfahrt anzeigende Signal zur Überwachung eines im Fahrzeug eingebauten Querbeschleunigungsgebers verwendet wird.

## Claims

1. Method for generating in a vehicle a signal indicating a bend, the wheels of the vehicle being assigned measured value generators for determining the wheel speeds, characterised in that the speed differential $\Delta V$ of wheels lying diagonally opposite one another and/or the time difference of these differentials are formed, and in that when predetermined threshold values are exceeded the signal indicating a bend is generated by at least one of these signals.

2. Method according to Claim 1, characterised in that the signal indicating a bend is used in a vehicle equipped with an anti-block control system with separate control of the front wheels and an element for delaying the build up of the yawing moment for the purpose of switching off the element for delaying the build up of yawing moment.

3. Method according to Claim 1, characterised in that the signal indicating a bend is used for monitoring a transverse acceleration generator installed in the vehicle.

## Revendications

1. Procédé pour obtenir dans un véhicule un signal indiquant l'amorçage d'un virage, procédé dans lequel des indicateurs de valeurs de mesure sont associés aux roues du véhicule pour déterminer la vitesse de ces roues, procédé caractérisé en ce que la différence de vitesse $\Delta V$ de roues placées en diagonale les unes par rapport aux autres et/ou la modification dans le temps de ces différences sont formées, et en ce que, lors du dépassement par au moins un de ces signaux de valeurs limites prédéfinies, le signal indiquant l'amorçage d'un virage est obtenu.

2. Procédé selon la revendication 1, caractérisé en ce que, dans un véhicule équipé d'un système de réglage antiblocage avec régulation distincte des roues avant et d'une temporisation de la formation du couple d'embardée, le signal indiquant l'amorçage d'un virage est utilisé pour la mise hors circuit de la temporisation de la formation du couple d'embardée.

3. Procédé selon la revendication 1, caractérisé en ce que le signal indiquant l'amorçage d'un virage est utilisé pour surveiller un indicateur d'accélération transversale monté dans le véhicule.

Fig.1

Fig.2